# EUROPÄISCHE PATENTSCHRIFT

(11) **EP 2 176 358 B1**
(45) Veröffentlichungstag und Bekanntmachung des Hinweises auf die Patenterteilung: **15.08.2012**
(21) Anmeldenummer: 08773367.1
(22) Anmeldetag: 05.06.2008
(51) Int. Cl.: C09B 67/22, C09B 19/02, C09B 67/20, C09D 11/00, C09D 11/02

(54) **PIGMENTZUBEREITUNGEN AUF BASIS VON DIOXAZINEN**
PIGMENT PREPARATIONS BASED ON DIOXAZINES
PRÉPARATIONS DE PIGMENTS À BASE DE DIOXAZINES

(30) Priorität: 05.07.2007 DE 102007031354
(43) Veröffentlichungstag der Anmeldung: 21.04.2010
(73) Patentinhaber: Clariant Finance (BVI) Limited, Road Town, Tortola (VG)
(72) Erfinder: SCHRADER, Klaus, 65779 Kelkheim (DE)
(74) Vertreter: Hütter, Klaus
(86) Internationale Anmeldenummer: PCT/EP2008/004522
(87) Internationale Veröffentlichungsnummer: WO 2009/003568

(56) Entgegenhaltungen:
- EP-A- 0 321 919
- EP-A- 0 504 923
- EP-A- 0 662 497
- EP-A- 0 803 544
- EP-A- 0 864 613
- WO-A-2006/128539
- DE-A1-102005 028 106
- US-A- 4 253 839

## Beschreibung

Pigmentzubereitungen sind Kombinationen von Basispigmenten und Hilfsmitteln. Dabei können die Hilfsmittel in zwei Kategorien unterteilt werden: in die so genannten Pigmentdispergatoren, das sind mit spezifisch wirksamen Gruppen substituierte Pigmente und in die nicht pigmentären Hilfsmittel. Die Hilfsmittel werden den Pigmenten zugesetzt, um die Dispergierung in den Anwendungsmedien, insbesondere in Lacken, Druckfarben und Tinten zu erleichtern und um die rheologischen und coloristischen Eigenschaften der Pigmente zu verbessern.

Bei der Druckfarbenherstellung wird aus den Pigmenten im ersten Schritt ein Farbkonzentrat mit hoher Pigmentierung (> 15 %) hergestellt. Diese Farbkonzentrate werden dann zur Druckfarbenherstellung auf die Druckfarbenkonzentration (6 - 10 %) eingestellt. Die in EP-A- 0 321 919 und EP-A- 0 504 923 beschriebenen Dioxazin-Farbmittel zeigen eine nicht völlig zufrieden stellende Viskosität und Lagerstabilität im Konzentrat. Das führt zu Problemen bei der Druckfarbenherstellung und bei der Lagerung von Farbkonzentraten. Weiterhin ist eine große Menge an Lösungsmitteln bzw. Lösungs- und Bindemitteln notwendig, um die für den Druckvorgang erforderliche Druckviskosität einzustellen. Das führt zu einer verminderten Farbstärke der Druckfarbe.

US-A-4 253 839 beschreibt ein Verfahren zur Feinverteilung von Dioxazinpigmenten, insbesondere für Anwendungen in Lacken und Kunststoffen.

WO-A-2006/128 539 beschreibt ein blaues Farbmittel auf Basis von C.I. Pigment Blue 80 zur Verwendung in Lacken, Farbfiltern, Inkjet-Tinten und Tonern.

DE-A-10 2005 028 106 befasst sich mit einem Verfahren zur Herstellung organischer Pigmente mit einheitlicher Kristallform.

EP-A2-0 803 544 beschreibt Schwefelsäurehalbester zur Herstellung von oberflächenbehandelten Pigmenten der Chinacridon- und Dioxazinklasse.

Ziel der vorliegenden Erfindung war es, ein Farbmittel mit violettem Farbton für den Einsatz von Drucktinten zur Verfügung zu stellen, das die voran stehend erläuterten Mängel überwindet.

Die Aufgabe wurde überraschenderweise durch eine Pigmentzubereitung aus einer Kombination von P.V. 23, Harzsäuren bzw. Harzsäurederivaten und speziellen Pigmentdispergatoren auf Basis von Dioxazinverbindungen gelöst.

Gegenstand der vorliegenden Erfindung ist eine Pigmentzubereitung, gekennzeichnet durch einen Gehalt an
a) einer Dioxazinverbindung der Formel (I) als Basispigment 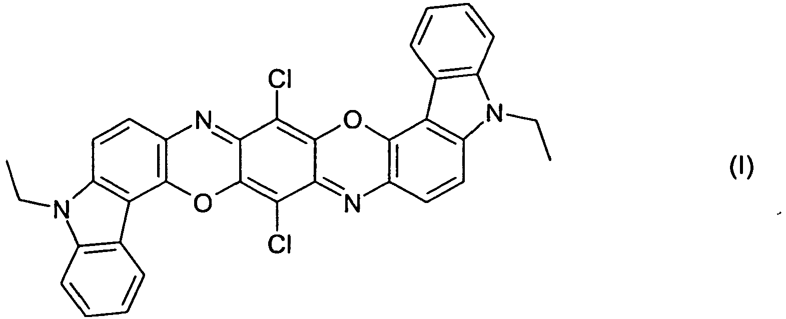 und
b) einer Dioxazinverbindung der allgemeinen Formel (II) als Pigmentdispergator

   Q-[Y-X]ₘ (II)

   worin
   - Q: für einen m-wertigen Rest des Basispigments der Formel (I) steht,
   - Y: -(CR¹R²)ₓ- mit x gleich 1 bis 6, wobei R¹ und R² unabhängig voneinander Wasserstoff oder C₁-C₄-Alkyl bedeuten,
   - X: ein über ein C-Atom an das Brückenglied Y gebundenen Imidazolrest bedeutet,
   - m: einen Zahlenwert zwischen 1 und 4 angibt,
   und
c) einer Harzkomponente aus der Gruppe der Abietinsäure, Dehydroabietinsäure, Dihydroabietinsäure, Tetrahydroabietinsäure, Laevopimarsäure, Dextropimarsäure, Isodextropimarsäure, Kolophoniumharz, auch teilhydriertes Kolophoniumharz, Harzseifen der genannten Säuren und Mischungen davon.

Bevorzugt sind Pigmentdispergatoren der Formel (II), worin
- Y: Methylen, Ethylen oder Propylen,
- X: über die Position 5 an das Brückenglied Y gebundenes Imidazolyl, und
- m: eine Zahl von 1 bis 2,5 ist.

Ganz besonders bevorzugt im Sinne der vorliegenden Erfindung sind Pigmentdispergatoren der Formel (III) 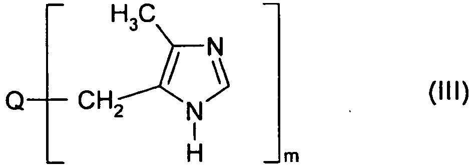 worin
- Q: die vorstehend genannte Bedeutung hat, und
- m: für einen Zahlenwert von 1 bis 2,5, insbesondere 1 bis 2, steht.

Bevorzugte Harzkomponenten sind handelsübliche Kolophoniumarten sowie Salze der genannten Säuren, auch Harzseifen genannt, wobei die Kationen Metallkationen sind, vorzugsweise aus der Gruppe der Alkalimetalle, Erdalkalimetalle, Erdmetalle und der Übergangsmetalle, wie Cr, Mn, Fe, Co, Ni, Cu, Zn, Ag. Besonders bevorzugt sind Li, Na, K, Mg, Ca, Sr, insbesondere Na und K.

Bevorzugt ist eine Pigmentzubereitung, enthaltend
a) 50 bis 99,7 Gew.-%, besonders bevorzugt 80 bis 99,7 Gew.-%, ganz besonders bevorzugt 90 bis 99,2 Gew.-% eines Basispigments der Formel I,
b) 0,1 bis 30 Gew.%, besonders bevorzugt 0,1 bis 10 Gew.-%, ganz besonders bevorzugt 0,1 bis 5 Gew.-% eines Pigmentdispergators der Formel II oder III,
c) 0,1 bis 30 Gew.-%, besonders bevorzugt 0,1 bis 10 Gew.-%, ganz besonders bevorzugt 0,1 bis 5 Gew.-% der Harzkomponente, jeweils bezogen auf das Gesamtgewicht der Pigmentzubereitung.

Die erfindungsgemäßen Pigmentzubereitungen können neben den genannten Komponenten noch weitere übliche Hilfsmittel oder Zusatzstoffe enthalten, wie beispielsweise Tenside, Dispergiermittel, Füllstoffe, Stellmittel, andere Harze als die vorstehend genannten, Wachse, Entschäumer, Antistaubmittel, Extender, Antistatika, Konservierungsmittel, Trocknungsverzögerungsmittel, Netzmittel, Antioxidantien, UV-Absorber und Lichtstabilisatoren, vorzugsweise in einer Menge von 0,1 bis 10 Gew.-%, insbesondere 0,5 bis 5 Gew.-%, bezogen auf das Gesamtgewicht der Pigmentzubereitung.

Als Tenside kommen anionische oder anionaktive, kationische oder kationaktive und nichtionische oder amphotere Substanzen oder Mischungen dieser Mittel in Betracht.

Gegenstand der Erfindung ist auch ein Verfahren zur Herstellung einer erfindungsgemäßen Pigmentzubereitung, dadurch gekennzeichnet, dass man C.I. Pigment Violet 23 vor oder während einer Feinverteilung, wie z. B. einer Knetung, Nassmahlung oder Trockenmahlung, oder unmittelbar vor oder während einer Finishbehandlung mit dem Pigmentdispergator der Formel (II) und der Harzkomponente versetzt.

Beispielsweise können die trockenen Komponenten in Granulat- oder Pulverform vor oder nach einer Mahlung gemischt werden; die eine Komponente kann zur anderen Komponente in feuchter oder trockener Form zugegeben werden, beispielsweise durch Mischen der Komponenten in Form der feuchten Presskuchen.

Das Mischen kann beispielsweise durch eine Mahlung in trockener Form, in feuchter Form, beispielsweise durch Knetung, oder in Suspension erfolgen, oder durch eine Kombination dieser Verfahren. Die Mahlung kann unter Zusatz von Wasser, Lösemitteln, Säuren oder Mahlhilfsmitteln wie Salz durchgeführt werden. Eine Knetung, die zur Feinverteilung der Pigmentkristalle führt, ist insbesondere eine Salzknetung in Gegenwart eines organischen Lösemittels.

Besonders bevorzugt erfolgt die Zugabe des Pigmentdispergators und der Harzkomponente zum Basispigment der Formel I während der Nassmahlung oder bei einer Finishbehandlung. Beispielsweise kann die Finishbehandlung in Wasser und/oder Lösemitteln und meist unter erhöhter Temperatur, beispielsweise bis 200 °C, und ggf. erhöhtem Druck erfolgen. Selbstverständlich kann der Pigmentdispergator und die Harzkomponente auch in Teilportionen zu unterschiedlichen Zeiten zugegeben werden.

Bei der Trocknung einer feuchten Pigmentzubereitung können die bekannten Trockenaggregate zum Einsatz kommen, wie Trockenschränke, Schaufelradtrockner, Taumeltrockner, Kontakttrockner und insbesondere Spinflash- und Sprühtrockner.

Gegenstand der Erfindung ist auch eine Pigmentzubereitung, erhältlich nach vorstehend beschriebenem Verfahren.

Die erfindungsgemäßen Pigmentzubereitungen lassen sich zum Pigmentieren von hochmolekularen organischen Materialien natürlicher oder synthetischer Herkunft einsetzen, beispielsweise von Kunststoffen, Harzen, Lacken, Anstrichfarben, elektrophotographischen Tonern und Entwicklern, Farbfiltern sowie von Tinten, auch Inkjet-Tinten, und insbesondere für Druckfarben.

Überraschenderweise zeigte sich, dass Druckfarbenkonzentrate mit einer erfindungsgemäßen Pigmentzubereitung im Vergleich zu einer Pigmentzubereitung, wie sie in EP-A- 0 321 919 und EP-A- 0 504 923 beschrieben ist, eine deutlich bessere Rheologie aufweisen und nicht bei der Lagerung eindicken.

Insbesondere zeigen die erfindungsgemäßen Pigmentzubereitungen hervorragende rheologische Eigenschaften selbst bei hoher Pigmentierung (z. B. 22 %) der Druckfarbenkonzentrate. Die aus diesen Druckfarbenkonzentraten hergestellten Druckfarben auf Basis von Alkohol und Ester geben Drucke mit hoher Transparenz und hohem Glanz.

Weiterhin besitzen die erfindungsgemäßen Pigmentzubereitungen eine breite Verträglichkeit auch in verschiedenen anderen Drucksystemen.

Gegenstand der Erfindung sind auch Druckfarbenkonzentrate, gekennzeichnet durch einen Gehalt von 15 bis 25 Gew.-%, vorzugsweise 17 bis 24 Gew.-%, insbesondere 18 bis 22 Gew.-%, der efindungsgemäßen Pigmentzubereitung.

In den folgenden Beispielen bedeuten Prozentangaben Gewichtsprozente Gewichtsteile, sofern nicht anders angegeben.

### Beispiel 1:

### a) Feinverteilung durch Trockenmahlung

30 g grobkristallines Rohpigment (Pigment Violet 23), hergestellt entsprechend BIOS Final Report 960, Seite 75, werden in ein zylindrisches 1-Liter-Kunststoffgefäß eingebracht, das mit 1400 g Korund-Mahlkörpern von 12 mm Durchmesser gefüllt ist. Das Gemisch wird nun 4 Stunden lang unter Schütteln auf einer Schwingmühle fein vermahlen. Danach wird das Mahlgut von den Mahlkörpern abgesiebt. Man erhält 29 g Mahlgut.

### b) Finish

Zu 450 g Wasser und 336 g Mahlgut aus Rohpigment P.V. 23 aus a) werden 112 g einer 5 %igen Lösung eines teilhydrierten Kolophoniumharzes in Natronlauge und 250 g Isobutanol (85 %ig) zugegeben. Nach mehrstündigem Rühren bei 150 °C im Autoklaven werden 330 Teile einer 3,8 %igen wässrigen Suspension des Pigmentdispergators der Formel (III) mit m gleich 1 zugegeben und das Lösemittel abdestilliert.

### c) Aufarbeitung

Anschließend wird der Ansatz heiß abgesaugt. Das Produkt wird salzfrei gewaschen und bei 80 °C im Vakuum getrocknet und anschließend pulverisiert.

### Beispiel 2:

Zu 350 g Wasser und 336 g Mahlgut aus Rohpigment P.V. 23 aus Beispiel 1a) werden 224 g einer wässrigen 5 %igen Lösung eines teilhydrierten Kolophoniumharzes in Natronlauge und 250 g Isobutanol (85 %ig) zugegeben. Nach mehrstündigem Rühren bei 150 °C im Autoklaven werden 330 Teile einer 3,8 %igen wässrigen Suspension des Pigmentdispergators der Formel (III) mit m gleich 1 zugegeben und das Lösemittel abdestilliert .

Anschließend wird der Ansatz heiß abgesaugt. Das Produkt wird salzfrei gewaschen und bei 80 °C im Vakuum getrocknet und anschließend pulverisiert.

Die aus den erfindungsgemäßen Pigmentzubereitungen hergestellten Druckfarben zeigen nach der Prüfvorschrift PV 3/20 (Clariant International AG, Global Quality Assurance, Juli 2005) im NC-Tiefdruck eine sehr gute Viskosität, Thixotropie und Lagerstabilität (Tabelle 1):

**Tabelle 1: Prüfergebnisse PV3/20 (Rheologie)**

| Probe | Auslaufzeit Auslaufbecher (45 ml Volumen) mit 3 mm Düsendurchmesser [Sek.] | Viskosität* bei Schergeschwindigkeit D=200 s⁻¹ [mPa·s] |
|---|---|---|
| Beispiel 1 | 13,9 | 116 |
| Beispiel 2 | 15,2 | 116 |

| | | |
|---|---|---|
| * Gemessen mit Rotationsviskosimeter | | |

### Beispiel 3:

252 g Dioxazinrohpigment Pigment Violet 23 werden mit 1.125 g Natriumchlorid (< 30 mikrometer) in einem Laborkneter gemischt und mit 230 ml DMF bei 50 °C 8 h geknetet. Anschließend wird die Knetmasse mit 11.000 g 5 gew.%iger Salzsäure versetzt, abgesaugt und mit E-Wasser gewaschen. Der Filterkuchen wird in 500 ml E-Wasser angeteigt und bei 60 °C mit 85 g einer wässrigen 5 %igen Lösung eines teilhydrierten Kolophoniumharzes in Natronlauge und mit 105 g einer 9 %igen wässrigen Suspension des Pigmentdispergators der Formel (III) mit m gleich 1 zugegeben. Anschließend wird der Ansatz heiß abgesaugt. Das Produkt wird salzfrei gewaschen und bei 80 °C im Vakuum getrocknet und anschließend pulverisiert.

## Patentansprüche

1. Pigmentzubereitung, **gekennzeichnet durch** einen Gehalt an
a) einer Dioxazinverbindung der Formel (I) als Basispigment 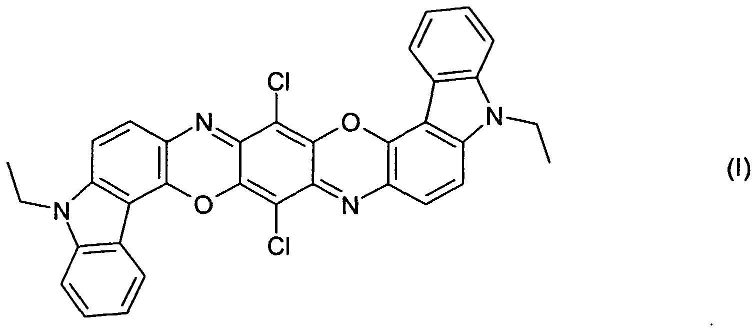 und
b) einer Dioxazinverbindung der allgemeinen Formel (II) als Pigmentdispergator
Q-[Y-X]ₘ (II)
worin
Q für einen m-wertigen Rest des Basispigments der Formel (I) steht,
Y -(CR¹R²)ₓ- mit x gleich 1 bis 6, wobei R¹ und R² unabhängig voneinander Wasserstoff oder C₁-C₄-Alkyl bedeuten,
X ein über ein C-Atom an das Brückenglied Y gebundenen Imidazolrest bedeutet,
m einen Zahlenwert zwischen 1 und 4 angibt,
und
c) einer Harzkomponente aus der Gruppe der Abietinsäure, Dehydroabietinsäure, Dihydroabietinsäure, Tetrahydroabietinsäure, Laevopimarsäure, Dextropimarsäure, Isodextropimarsäure, Kolophoniumharz, teilhydriertes Kolophoniumharz, Harzseifen der genannten Säuren und Mischungen davon.

2. Pigmentzubereitung nach Anspruch 1, **dadurch gekennzeichnet, dass**
Y Methylen, Ethylen oder Propylen,
X über die Position 5 an das Brückenglied Y gebundenes Imidazolyl, und
m eine Zahl von 1 bis 2,5 ist.

3. Pigmentzubereitung nach Anspruch 1 oder 2, **dadurch gekennzeichnet** durch einen Pigmentdispergator der Formel (III) 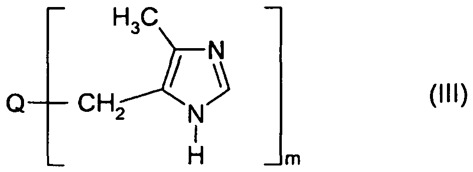 worin
Q die in Anspruch 1 genannte Bedeutung hat, und
m für einen Zahlenwert von 1 bis 2,5 steht.

4. Pigmentzubereitung nach einem oder mehreren der Ansprüche 1 bis 3, enthaltend
a) 50 bis 99,7 Gew.-% eines Basispigments der Formel I,
b) 0,1 bis 30 Gew.-% eines Pigmentdispergators der Formel II oder III,
c) 0,1 bis 30 Gew.-% der Harzkomponente, jeweils bezogen auf das Gesamtgewicht der Pigmentzubereitung.

5. Pigmentzubereitung nach einem oder mehreren der Ansprüche 1 bis 4, enthaltend
a) 80 bis 99,7 Gew.-% eines Basispigments der Formel I,
b) 0,1 bis 10 Gew.-% eines Pigmentdispergators der Formel II oder III,
c) 0,1 bis 10 Gew.-% der Harzkomponente, jeweils bezogen auf das Gesamtgewicht der Pigmentzubereitung.

6. Verfahren zur Herstellung einer Pigmentzubereitung nach einem oder mehreren der Ansprüche 1 bis 5, **dadurch gekennzeichnet, dass** man C.I. Pigment Violet 23 der Formel (I) vor oder während einer Feinverteilung, oder unmittelbar vor oder während einer Finishbehandlung mit dem Pigmentdispergator der Formel (II) und der Harzkomponente versetzt.

7. Verwendung einer Pigmentzubereitung nach einem oder mehreren der Ansprüche 1 bis 5 zum Pigmentieren von hochmolekularen organischen Materialien natürlicher oder synthetischer Herkunft

8. Verwendung nach Anspruch 7, **dadurch gekennzeichnet, dass** die Materialien Kunststoffe, Harze, Lacke, Anstrichfarben, elektrophotographische Toner und Entwickler, Farbfilter oder Tinten sind.

9. Verwendung nach Anspruch 7 oder 8 zum Pigmentieren von Inkjet-Tinten und Druckfarben.

10. Druckfarbenkonzentrat, **gekennzeichnet durch** einen Gehalt von 15 bis 25 Gew.-% der Pigmentzubereitung gemäß einem oder mehreren der Ansprüche 1 bis 5.

## Claims

1. A pigment preparation comprising
a) a dioxazine compound of formula (I) as base pigment 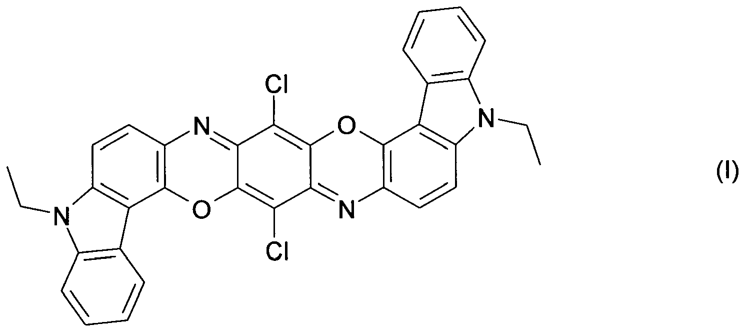 and
b) a dioxazine compound of formula (II) as a pigmentary dispersant
Q-[Y-X]ₘ (II)
where
Q represents an m-valent residue of the base pigment of formula (I),
Y represents -(CR¹R²)ₓ- where x is from 1 to 6 and R¹ and R² each independently represent hydrogen or C₁-C₄-alkyl,
X represents an imidazole radical attached to the bridge member Y via a carbon atom,
m represents a numerical value between 1 and 4,
and
c) a resin component from the group consisting of abietic acid, dehydroabietic acid, dihydroabietic acid, tetrahydroabietic acid, laevopimaric acid, dextropimaric acid, isodextropimaric acid, rosin, partially hydrogenated rosin, resin soaps of the acids mentioned and mixtures thereof.

2. The pigment preparation as claimed in claim 1, wherein
Y represents methylene, ethylene or propylene,
X represents imidazolyl attached to the bridge member Y via position 5, and
m represents a number from 1 to 2.5.

3. The pigment preparation as claimed in claim 1 or 2, comprising a pigmentary dispersant of formula (III) 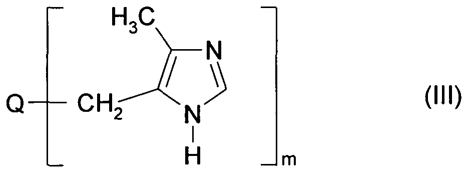 where
Q is as defined in claim 1, and
m represents a numerical value from 1 to 2.5.

4. The pigment preparation as claimed in one or more of claims 1 to 3, comprising
a) 50% to 99.7% by weight of a base pigment of formula I,
b) 0.1% to 30% by weight of a pigmentary dispersant of formula II or III,
c) 0.1% to 30% by weight of the resin component, all based on the overall weight of the pigment preparation.

5. The pigment preparation as claimed in one or more of claims 1 to 4, comprising
a) 80% to 99.7% by weight of a base pigment of formula I,
b) 0.1% to 10% by weight of a pigmentary dispersant of formula II or III,
c) 0.1% to 10% by weight of the resin component, all based on the overall weight of the pigment preparation.

6. A process for producing a pigment preparation as claimed in one or more of claims 1 to 5, which comprises admixing C.I. Pigment Violet 23 of formula (I) with the pigmentary dispersant of formula (II) and the resin component before or during a conversion into a fine state of subdivision or immediately before or during a conditioning treatment.

7. The use of a pigment preparation as claimed in one or more of claims 1 to 5 for pigmenting macromolecular organic materials of natural or synthetic origin.

8. The use as claimed in claim 7, wherein the materials are plastics, resins, coatings, paints, electrophotographic toners and developers, color filters or liquid inks.

9. The use as claimed in claim 7 or 8 for pigmenting liquid inkjet inks and printing inks.

10. A printing ink concentrate comprising 15% to 25% by weight of the pigment preparation as claimed in one or more of claims 1 to 5.

## Revendications

1. Composition de pigment, **caractérisée par** une teneur en
a) un composé dioxazine de formule (I) en tant que pigment de base 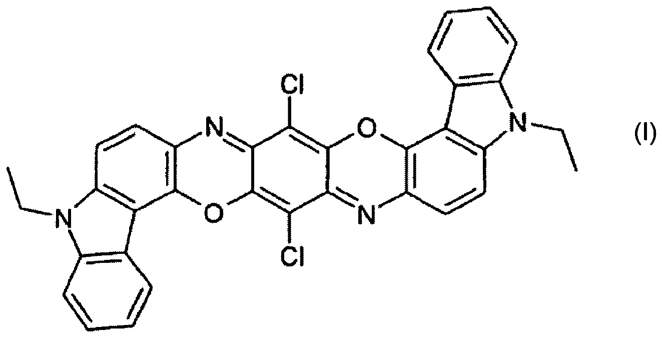 et
b) un composé dioxazine de formule générale (II) en tant que dispersant pigmentaire
Q-[Y-X]ₘ, (II)
Q représente un reste m-valent du pigment de base de formule (I),
Y représente -(CR¹R²)ₓ- où x vaut de 1 à 6, R¹ et R² représentant indépendamment l'un de l'autre un atome d'hydrogène ou un groupe alkyle en C₁-C₄,
X représente un radical imidazole lié au chaînon pontant Y par un atome de carbone,
m représente une valeur numérique comprise entre 1 et 4,
et
c) représente un composant de type résine choisi dans le groupe constitué par l'acide abiétique, l'acide déhydroabiétique, l'acide dihydroabiétique, l'acide tétrahydroabiétique, l'acide lévopimarique, l'acide dextropimarique, l'acide isodextropimarique, la résine colophane, la résine colophane partiellement hydrogénée, des résinates des acides nommés et des mélanges de ceux-ci.

2. Composition de piment selon la revendication 1, **caractérisée en ce que**
Y représente le groupe méthylène, éthylène ou propylène,
X représente un groupe imidazolyle lié par la position 5 au chaînon pontant Y, et
m est un nombre valant de 1 à 2,5.

3. Composition de piment selon la revendication 1 ou 2, **caractérisée par** un dispersant pigmentaire de formule (III) 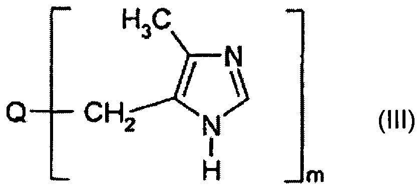 dans laquelle
Q a la signification donnée dans la revendication 1, et
m représente une valeur numérique de 1 à 2,5.

4. Composition de pigment selon une ou plusieurs des revendications 1 à 3, contenant
a) 50 à 99,7 % en poids d'un pigment de base de formule I,
b) 0,1 à 30 % en poids d'un dispersant pigmentaire de formule II ou III,
c) 0,1 à 30 % en poids du composant de type résine, chaque fois par rapport au poids total de la composition de pigment.

5. Composition de pigment selon une ou plusieurs des revendications 1 à 4, contenant
a) 80 à 99,7 % en poids d'un pigment de base de formule I,
b) 0,1 à 10 % en poids d'un dispersant pigmentaire de formule II ou III,
c) 0,1 à 10 % en poids du composant de type résine, chaque fois par rapport au poids total de la composition de pigment.

6. Procédé pour la préparation d'une composition de pigment selon l'une quelconque des revendications 1 à 5, **caractérisé en ce qu'**on mélange du pigment C.I. Pigment Violet 23 de formule (I), avant ou pendant une fine division, ou immédiatement avant ou pendant un traitement de finissage, avec le dispersant pigmentaire de formule (II) et le composant de type résine.

7. Utilisation d'une composition de pigment selon une ou plusieurs des revendications 1 à 5, pour la pigmentation de matières organiques de masse moléculaire élevée, d'origine naturelle ou synthétique.

8. Utilisation selon la revendication 7, **caractérisée en ce que** les matières sont des matières plastiques, des résines, des laques, des peintures, des toners et développeurs électrophotographiques, des filtres colorés ou des encres.

9. Utilisation selon la revendication 7 ou 8, pour la pigmentation d'encres pour impression par jet d'encre et d'encres d'impression.

10. Concentré d'encre d'impression, **caractérisé par** une teneur de 15 à 25 % en poids en la composition de pigment selon une ou plusieurs des revendications 1 à 5.
